# EUROPEAN PATENT SPECIFICATION

(11) **EP 3 733 428 B1**
(45) Date of publication and mention of the grant of the patent: **16.03.2022**
(21) Application number: 20171906.9
(22) Date of filing: 28.04.2020
(51) Int. Cl.: B60C 1/00, C08C 19/26, C08F 36/06, C08F 4/54, C08L 19/00

(54) **FUNCTIONALIZED ALUMINUM REAGENTS, METHOD OF MAKING A FUNCTIONALIZED ELASTOMER, ELASTOMER, RUBBER COMPOSITION AND TIRE**
FUNKTIONALISIERTE ALUMINIUMREAGENZIEN, VERFAHREN ZUR HERSTELLUNG EINES FUNKTIONALISIERTEN ELASTOMERS, ELASTOMER, KAUTSCHUKZUSAMMENSETZUNG UND REIFEN
RÉACTIFS D'ALUMINIUM FONCTIONNALISÉS, PROCÉDÉ DE FABRICATION D'UN ÉLASTOMÈRE FONCTIONNALISÉ, ÉLASTOMÈRE, COMPOSITION DE CAOUTCHOUC ET PNEUMATIQUE

(30) Priority: 01.05.2019 US 201916400066; 01.05.2019 US 201916400085
(43) Date of publication of application: 04.11.2020
(73) Proprietor: The Goodyear Tire & Rubber Company, Akron, OH 44316 (US)
(72) Inventor: MECKING, Stefan, 79464 Konstanz (DE); FLOOK VIELHABER, Margaret, Kent, Ohio 44240 (US); GOTTKER GENANNT SCHNETMANN, Inigo, 78462 Konstanz (DE); KENYON, Philip, Oxford, OX2 9LD (GB)
(74) Representative: Kutsch, Bernd

(56) References cited:
- WO-A1-2019/012009
- BO LIU ET AL: "Regioselective Chain Shuttling Polymerization of Isoprene: An Approach To Access New Materials from Single Monomer", MACROMOLECULES, vol. 49, no. 17, 13 September 2016 (2016-09-13), pages 6226-6231, XP055486006, WASHINGTON, DC, UNITED STATES ISSN: 0024-9297, DOI: 10.1021/acs.macromol.6b00904
- ANDREIA VALENTE ET AL: "Coordinative Chain Transfer Polymerization", CHEMICAL REVIEWS, vol. 113, no. 5, 8 May 2013 (2013-05-08), pages 3836-3857, XP055150924, ISSN: 0009-2665, DOI: 10.1021/cr300289z
- INIGO GÖTTKER-SCHNETMANN ET AL: "Coordinative Chain Transfer Polymerization of Butadiene with Functionalized Aluminum Reagents", ANGEWANDTE CHEMIE INT ED, vol. 58, no. 49, 2 December 2019 (2019-12-02), pages 17777-17781, XP055715586, DE ISSN: 1433-7851, DOI: 10.1002/anie.201909843

## Description

### Background

Coordinative chain transfer polymerization (CCTP) using main group metals, i. e., a reversible chain transfer of polymeryl chains between chain growth active metal centers and chain growth inactive metal centers, has become an important strategy in insertion polymerization to reduce the amount of polymerization catalysts, to control the molecular weight and molecular weight distribution of polymers as well as to introduce chain end-functionalization by appropriate quenching of main group metal polymeryls. See Valente et al., Chem. Rev. 2013, 113, 3836 - 3857; Jian et al., Chem. Commun. 2010, 46, 3022 - 3024; German et al., Angew. Chem. Int. Ed. 2013, 52, 3438 - 3441; Norsic et al., Angew. Chem. Int. Ed. 2015, 54, 4631 - 4635; and Makio et al., J. Am. Chem. Soc. 2013, 135, 8177 - 8180.

Most commonly, commercially available un-functionalized aluminum and zinc alkyls have been employed, with zinc alkyls much better performing in terms of transfer efficiency and thus molecular weight control. With respect to heteroatom-functionalized main group metal alkyls, recently homoleptic di(ω-aminoalkyl) magnesium reagents have been used as chain transfer reagents to yield end functionalized amino polyethylenyl magnesiums (Ottou et al., Macromolecules 2017, 50, 8372 - 8377). Functionalized magnesium reagents were also employed to initiate polybutadiene chain growth to end-functionalized high trans polybutadiene (Leicht et al., Macromolecules 2018, 51, 763 - 770.), or with increased chain transfer numbers, to functionalized polybutadienes of less uniform stereochemistry (WO-A-2010/013945).

In contrast, both in organic synthesis and in polymer chemistry, heteroatom-functionalized aluminum reagents have scarcely been used as synthetically useful reactants for the transfer of functional group substituted carbon nucleophiles probably owing to drawbacks in the synthesis of homoleptic aluminum alkyls or the expectedly low chemoselectivity of mixed aluminum alkyls (Xu et al., Acc. Chem. Res. 2016, 49, 2158 - 2168; Gao et al., J. Am. Chem. Soc., 2010, 132, 10961 - 10963; May et al., Org. Lett., 2011, 13, 3040 - 3043).

### Summary of the Invention

The present invention is directed to a functionalized aluminum reagent in accordance with claim 1, to a method of making a functionalized elastomer in accordance with claim 3, to a functionalized polymer in accordance with claim 4, to a rubber composition in accordance with claim 5 and to a pneumatic tire in accordance with claim 6.

Dependent claims refer to preferred embodiments of the invention.

### Description of Example Embodiments of the Invention

There are disclosed functionalized aluminum reagents of formula 1 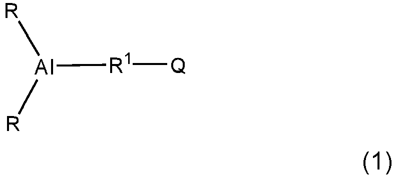 where R is a linear or branched alky or alkane group containing of from 1 to 8 carbon atoms and R¹ is a phenylene group (or a phenylene) or a linear or branched alkane diyl group containing of from 2 to 10 carbon atoms or a combination of one or more phenylene groups and one or more linear or branched alkane diyl groups containing of from 1 to 10 carbon atoms, Q is of formula 2 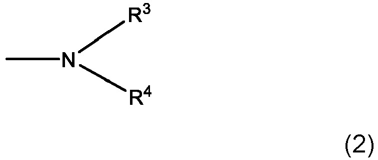 where R³ and R⁴ are independently selected from a phenyl or a linear or branched alkyl group containing of from 1 to 10 carbon atoms or R³ and R⁴ taken together with the nitrogen atom represent a nitrogen containing heterocyclic group containing of from 4 to 12 carbon atoms.

There is further disclosed a method of making functionalized aluminum reagents.

Functionalized aluminum reagents of formula 1 and 2 may be produced by reaction of a compound of formula 3 with a dialkyl aluminum hydride of formula 4 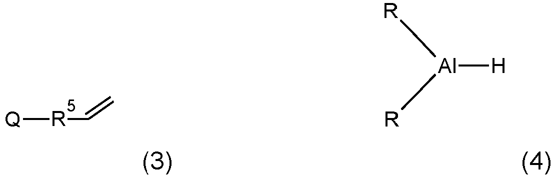 where R⁵ is a phenylene group or a linear or branched alkane diyl group containing of from 1 to 9 carbon atoms or a combination of one or more phenylene groups and one or more linear or branched alkane diyl groups containing of from 1 to 10 carbon atoms and R is as previously defined.

The reaction of the compounds of formulas 3 and 4 may be done at or neat at a temperature ranging from 25 to 75 °C for 12 to 36 hours. Optionally, the reaction may proceed in a hydrocarbon solvent in the presence of a neodymium (III) catalyst.

In one embodiment, the compound of formula 4 is diisobutyl aluminum hydride (DIBAL-H).

In various embodiment, the functionalized aluminum reagent of formula 1 may be one of the following compounds 1a - 1l.

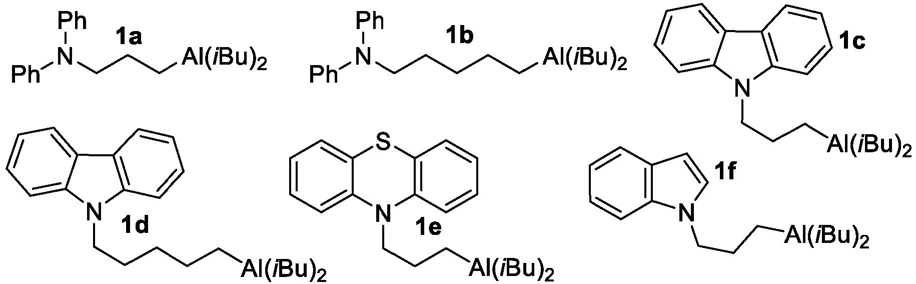

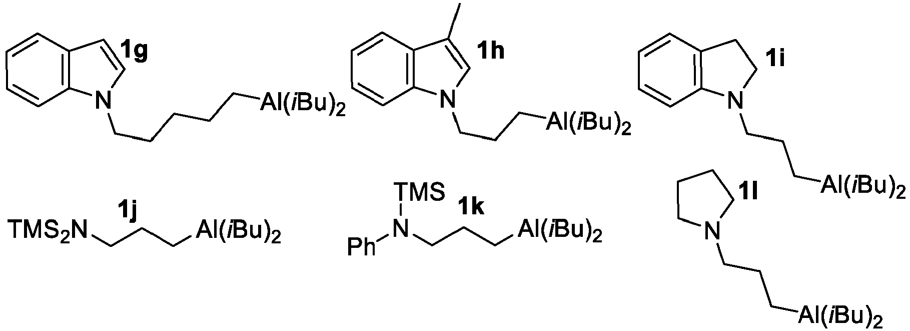

The functionalized aluminum reagents are useful, for example, as activators for lanthanide-based catalysts in polymerization of conjugated dienes.

The invention is further illustrated by the following examples.

### Example 1

### (3-Diphenylaminopropyl)diisobutyl aluminum (1a)

*N*,*N*-Diphenyl-*N*-allylamine (418 mg, 2 mmol), DIBAL-H (327 mg, 2.3 mmol), Nd(versatate)₃ (163 mg solution in hexanes, 100 µmol, 5 mol %), and 92 mg C₆D₆ were combined in an 8 mL screw-cap vial and stirred for 14 h at 323 K. The resulting solution contains 1 µmol Nd and ca. 20 µmol of (3-Diphenylaminopropyl)diisobutyl aluminum (**1a**) per 10 mg solution and was used without further purification.

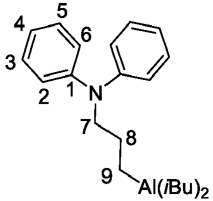

¹H NMR (400 MHz, C₆D₆, 300 K): δ 7.06 (m, 4H, 2- and 6-H), 6.93 (m, 4H, 3- and 5-H), 6.83 (m, 2H, 4-H), 3.02 (t, ³*J*_{HH} = 6.0 Hz, 2H, 7-H₂), 2.03 (n, ³*J*_{HH} = 6.6 Hz, 2H, 2 × (CH₃)₂C*H*CH₂Al), (1.76 (m, 2H, 8-H₂), 1.18 (d, ³*J*_{HH} = 6.6 Hz, 12H, 2 × (C*H*₃)₂CHCH₂Al), 0.53 (m, 2H, 9-H₂), 0.11 (d, ³*J*_{HH} = 6.6 Hz, 4H, 2 × (CH₃)₂CHC*H*₂Al). ¹³C NMR (100 MHz, C₆D₆, 300 K): δ 149.84 (C_{q}, C1), 129.04 (CH, C3 and C5), 126.56 (CH, C4), 124.80 (CH, C2 and C6), 60.51 (C7), 28.69 (2 × (*C*H₃)₂CHCH₂Al), 27.13 (2 × (CH₃)₂*C*HCH₂Al), 24.90 (2 × (CH₃)₂CH*C*H₂Al), 22.04 (C8), 3.75 (C9).

### Example 2

### (5-Diphenylaminopentyl)diisobutyl aluminum (1b)

*N*,*N*-Diphenyl-*N*-pent-4-enylamin (475 mg, 2 mmol), and DIBAL-H (291 mg, 2.05 mmol) were combined in a 8 mL screw-cap vial and stirred for 14 h at 323 K after which **1b** had formed in ca 93 % along with traces of isobutene.

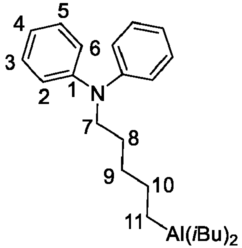

¹H NMR (400 MHz, C₆D₆, 300 K): δ 7.11 (m, 4H, 3- and 5-H), 7.01 (m, 4H, 2- and 6-H), 6.83 (m, 2H, 4-H), 3.54 (t, ³*J*_{HH} = 7.3 Hz, 2H, 7-H₂), 1.95 (m, 2H, 2 × (CH₃)₂C*H*CH₂Al), (1.63 (m, 2H, 8-H₂), 1.49 (m, 2H, 10-H₂), 1.31 (m, 2H, 9-H₂), 1.03 (d, ³*J*_{HH} = 7.2 Hz, 12H, 2 × (C*H*₃)₂CHCH₂Al), 0.3 (br, 6 H, 11-H₂ and 2 × (CH₃)₂CHC*H*₂Al). ¹³C NMR (100 MHz, C₆D₆, 300 K): δ 148.72 (C6), 129.51 (C3 and C5), 121.91 (C4), 121.42 (C2 and C6), 53.23 (C7), 33.13 (C9), 28.27 (2 × (*C*H₃)₂C*H*CH₂Al), 27.21 (C8), 26.43 (2 × (*C*H₃)₂CHCH₂Al), 25.56 (C10), 23.99 (br, 2 × (CH₃)₂CH*C*H₂Al), 11.52 (br, C11).

### Example 3

### (3-(9H-carbazol-9-yl)propyl)diisobutyl aluminum (1c)

*N*-Allylcarbazole (2073 mg, 10 mmol), and DIBAL-H (1500 mg, 10.5 mmol) were combined in a 8 mL screw-cap vial and stirred for 16 h at 323 K after which **1c** had formed > 95 % along with traces of isobutene. 1c was alternatively prepared within 24h at 298 K in the presence of 5 mol % Nd(versatate)₃.

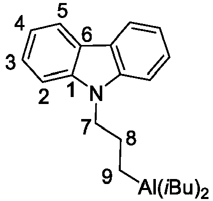

¹H NMR (400 MHz, C₆D₆, 300 K): δ 7.68 (m, 2H, 2-H), 7.19 (m, 2H, 4-H), 7.09 (m, 4H, 3- and 5-H), 3.40 (t, ³*J*_{HH} = 6.6 Hz, 2H, 7-H₂), 1.80 (m, 2H, 8-H₂), 1.71 (m, 2H, 2 × (CH₃)₂C*H*CH₂Al), 0.91 (d, ³*J*_{HH} = 6.4 Hz, 12H, 2 × (C*H*₃)₂CHCH₂Al), 0.06 (m, 2H, 9-H₂), - 0.16 (m br, 4H, 2 × (CH₃)₂CHC*H*₂Al). ¹³C NMR (100 MHz, C₆D₆, 300 K): δ 145.30 (C1), 126.68 (C4), 126.43 (C6), 122.17 and 112.85 (C3 and C5), 120.71 (C2), 53.88 (C7), 28.24 (2 × (*C*H₃)₂CHCH₂Al), 26.24 (2 × (CH₃)₂C*H*CH₂Al), 25.92 (C8), 24.40 (2 × (CH₃)₂CHC*H₂*Al), 8.36 (C9).

### Example 4

### (5-(9H-carbazol-9-yl)pentyl)diisobutyl aluminum (1d)

*N*-Pent-4-enylcarbazole (1177 mg, 5 mmol), and DIBAL-H (780 mg, 5.48 mmol) were combined in a 8 mL screw-cap vial and stirred for 16 h at 323 K after which **1d** had formed > 95 % along with traces of isobutene. **1d** was alternatively prepared within 4h at 343K, or within 24h at 298K in presence of 5 mol % Nd(versatate)₃.

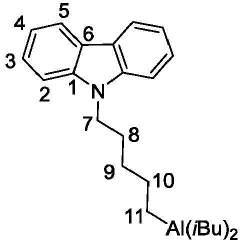

¹H NMR (400 MHz, C₆D₆, 300 K): δ 8.01 (m, 2H, 2-H), 7.37 (m, 2H, 4-H), 7.18 (m, 4H, 3- and 5-H), 3.81 (t, ³*J*_{HH} = 6.8 Hz, 2H, 7-H₂), 1.90 (m, 2H, 2 × (CH₃)₂C*H*CH₂Al), 1.56 (m, 2H, 8-H₂), 1.22 (m, 2H, 10-H₂), 1.14 (m, 2H, 9-H₂) 1.02 (d, ³*J*_{HH} = 6.4 Hz, 12H, 2 × (C*H*₃)₂CHCH₂Al), 0.21 (m, 4H, 4H, 2 × (CH₃)₂CHC*H*₂Al), 0.35 (m br, 11-H₂). ¹³C NMR (100 MHz, C₆D₆, 300 K): δ 140.93 (C1), 125.90 (C4), 123.48 (C6), 120.79 (C2), 119.14 and 109.06 (C3 and C5), 42.92 (C7), 33.23 (C9), 28.73 (C8), 28.26 (2 × (C*H*₃)₂CHCH₂Al), 26.30 (2 × (CH₃)₂C*H*CH₂Al), 25.37 (C10), 24.8 (v br, 2 × (CH₃)₂CHC*H*₂Al), 12.12 (C11).

### Example 5

### (3-(10H-phenothiazin-10-yl)propyl)diisobutyl aluminum (1e)

*N*-Allylphenothiazin (1197 mg, 5 mmol), and DIBAL-H (700 mg, 4.92 mmol), and C₆D₆ (603 mg) were combined in a 8 mL screw-cap vial and stirred for 16 h at 323 K after which **1d** had formed > 90 %. The resulting solution contains 20 µmol **1e** per 10 mg solution.

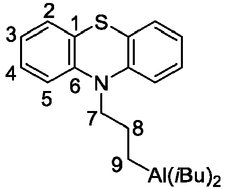

¹H NMR (400 MHz, C₆D₆, 300 K): δ 7.07, 6.87, and 6.69 (m:m:m, 2:2:4H, 2-H to 5-H), 3.45 (t, ³*J*_{HH} = 5.2 Hz, 7-H₂), 2.00 (m, 2H, 8-H₂), 1.80 (m, 2H, 2 × (CH₃)₂C*H*CH₂Al), 1.02 (br, 12H, 2 × (C*H*₃)₂CHCH₂Al), 0.24 (t, ³*J*_{HH} = 6.8 Hz, 9-H₂), -0.03 (br, 2 × (CH₃)₂CHC*H*₂Al). ¹³C NMR (100 MHz, C₆D₆, 300 K): δ 146.02 and 122.78 (C1 and C6), 128.92, 128.24, 124.77, and 118.41 (C2-C5), 53.80 (C7), 28.49 (2 × (*C*H₃)₂CHCH₂Al), 26.93 (2 × (CH₃)₂*C*HCH₂Al), 25.18 (2 × (CH₃)₂CH*C*H₂Al), 24.70 (C8), 8.93 (C9).

### Example 6

### (3-(1H-indol-1-yl)propyl)diisobutyl aluminum (1f)

*N*-Allylindol (1572 mg, 10 mmol), and DIBAL-H (1480 mg, 10.4 mmol) were combined in a 8 mL screw-cap vial and stirred for 16 h at 323 K after which **1f** had formed > 95 %.

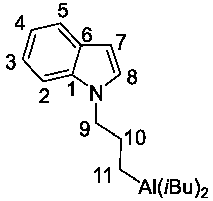

¹H NMR (400 MHz, C₆D₆, 300 K): δ 7.51, 7.14, and 7.05 (m each, 1:1:2H, 2-H to 5-H), 6.67 and 6.42 (br each, 1:1H, 7-H and 8-H), 3.43 (m br, 2H, 9-H₂), 1.79 (m br, 2H, 2 × (CH₃)₂C*H*CH₂Al), 1.59 (m br, 10-H₂), 0.98 (d, ³*J*_{HH} = 6.4 Hz, 12H, 2 × (C*H*₃)₂CHCH₂Al), - 0.09 (br, 6H, 11-H₂ and 2 × (CH₃)₂CHC*H*₂Al). ¹³C NMR (100 MHz, C₆D₆, 300 K): δ 139.08 and 129.96 (C1 and C6), 126.48 and 105.28 (C7 and C8), 124.80, 122.45, 121.28, and 110.93 (C2-C5), 50.83 (C9), 28.30 (2 × (*C*H₃)₂CHCH₂Al), 26.38 (2 × (CH₃)₂*C*HCH₂Al), 26.13 (C10), 24.51 (2 × (CH₃)₂CH*C*H₂Al), 9.82 (C11).

### Example 7

### (5-(1H-indol-1-yl)pentyl)diisobutyl aluminum (1g)

*N*-Pent-4-enylindol (927 mg, 5 mmol), and DIBAL-H (720 mg, 5.06 mmol) were combined in a 8 mL screw-cap vial and stirred for 16 h at 323 K after which **1g** had formed > 95 %.

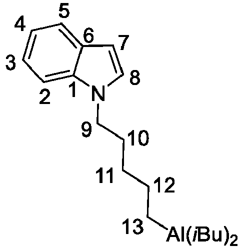

¹H NMR (400 MHz, C₆D₆, 300 K): δ 7.69 and 7.17 (m each, 1:3H, 2-H to 5-H), 6.90 and 6.45 (br each, 1:1H, 7-H and 8-H), 3.61 (m, 2H, 9-H₂), 1.92 (m, 2H, 2 × (CH₃)₂C*H*CH₂Al), 1.54 (m, 2H, 10-H₂), 1.28 (m br, 2H, 12-H₂), 1.14 (m br, 2H, 11-H₂), 1.05 (d, ³*J*_{HH} = 6.8 Hz, 12H, 2 × (C*H*₃)₂CHCH₂Al), 0.20 (m br, 4H, 2 × (CH₃)₂CHC*H*₂Al), - 0.06 (m br, 2H, 13-H₂). ¹³C NMR (100 MHz, C₆D₆, 300 K): δ 137.10 and 129.66 (C1 and C6), 130.85 and 97.85 C7 and C8), 122.40, 121.74, 120.39, and 110.12 (C2-C5), 46.63 (C9), 33.02 (C11), 29.75 (C10), 28.37 (2 × (*C*H₃)₂CHCH₂Al), 26.48 (2 × (CH₃)₂*C*HCH₂Al), 25.54 (C12), 24.59 (2 × (CH₃)₂CH*C*H₂Al), 11.65 (C13).

### Example 8

### (3-(3-methyl-1H-indol-1-yl)propyl)diisobutyl aluminum (1h)

*N*-Allyl-3-methylylindol (856 mg, 5 mmol), and DIBAL-H (720 mg, 5.06 mmol) were combined in a 8 mL screw-cap vial and stirred for 16 h at 323 K after which **1g** had formed > 95 %.

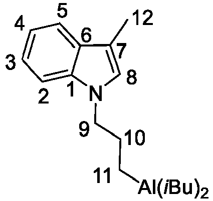

¹H NMR (400 MHz, C₆D₆, 300 K): δ 7.33, 7.09, and 7.05 (m each, 1:1:2H, 2H to 5-H), 6.37 (s, 1H, 8-H), 3.31 (t, ³*J*_{HH} = 6.2 Hz, 9-H₂), 2.06 (s, 3H, 12-H₃), 1.79 (m br, 2H, 10-H₂), 1.71 (m br, 2H, 2 × (CH₃)₂C*H*CH₂Al), 0.91 (d, ³*J*_{HH} = 6.8 Hz, 12H, 2 × (C*H*₃)₂CHCH₂Al), 0.11 (m br, 2H, 11-H₂), -0.20 (m br, 4H, 2 × (CH₃)₂CHC*H*₂Al). ¹³C NMR (100 MHz, C₆D₆, 300 K): δ 141.96 and 131.60 (C1 and C6), 124.6, 121.89, 120.43, and 112.47 (cC2-C5 and C8), 109.7 (C7), 52.44 (C9), 28.37 (2 × (*C*H₃)₂CHCH₂Al), 26.40 (2 × (CH₃)₂*C*HCH₂Al), 25.80 (C10), 23.73 (2 × (CH₃)₂CH*C*H₂Al), 9.98 (C12), 8.77 (C11).

### Example 9

### (3-(indolin-1-yl)propyl)diisobutyl aluminum (1i)

*N*-Allylindolin (796 mg, 4 mmol) and DIBAL-H (595 mg, 4.18 mmol) were combined in a 8 mL screw-cap vial and stirred for 16 h at 343 K after which **1i** had formed > 90 %. Due to coordination of aluminum to the nitrogen atom, 7-11-CH₂ exhibit diastereotopic protons, likewise the *i*Bu groups become fully diastereotopic.

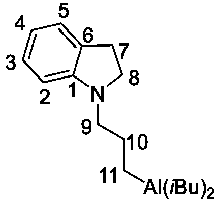

¹H NMR (400 MHz, C₆D₆, 300 K): δ 6.94 and 6.87 (m each, 1:2H, 3-, 4-, and 5-H), 6.78 (m, 1H, 2-H), 3.54 and 2.24 (m each, 1:1H, 8-H₂), 3.06 and 2.24 (m each, 1:1H, 9-H₂), 2.79 and 2.42 (m each, 1:1H, 7-H₂), 1.98 and 1.61 (m each, 1:1H, 10-H₂), 1.98 and 1.76 (2 × (CH₃)₂C*H*CH₂Al), 1.10, 1.06, 0.99, and 0.86 (d each, ³*J*_{HH} = 6.4 Hz, 12H, 2 × (C*H*₃)₂CHCH₂Al), 0.29 (m, 2H, 11-H₂), -0.06 and -0.25 (m each, 2:2H, 2 × (CH₃)₂CHC*H*₂Al). ¹³C NMR (100 MHz, C₆D₆, 300K): 8 149.11 (C1), 133.52 (C6), 127.26, 125.71, and 125.24 (C3-C5), 117.06 (C2), 63.03 (C9), 57.97 (C8), 28.87, 28.84, 28.78, 28.74, and 28.41 (2 × (*C*H₃)₂CHCH₂Al and C7), 27.27 and 26.92 (2 × (CH₃)₂*C*HCH₂Al), 23.51 (C10), 23.41 and 23.06 (2 × (CH₃)₂CH*C*H₂Al), 4.58 (C11).

### Example 10

### (3-(phenyl(trimethylsilyl)amino)propyl)diisobutyl aluminum (1k)

*N*-Allyl-*N*-phenyl-*N*-trimethylsilyamine (1097 mg, 5 mmol), DIBAL-H (782 mg, 5.5 mmol), Nd(versatate)₃ (407 mg solution in hexanes, 250 µmol), and 214 mg C₆D₆ were combined in a 8 mL screw-cap vial and stirred for 16 h at 343 K after which **1k** had formed ca 95 %. The solution contains 1 µmol Nd and ca 20 µmol **1k** per 10 mg solution.

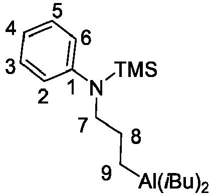

¹H NMR (400 MHz, C₆D₆, 300 K): δ 6.95 and 6.85 (m each, 4:1H, 2-H to 5-H), 2.98 (t, ³*J*_{HH} = 6.4 Hz, 7-H₂), 2.05 (m, 2H, 2 × (CH₃)₂C*H*CH₂Al), 1.91 (m, 2H, 8-H₂), 1.16 (d, ³*J*_{HH} = 6.4 Hz, 2 × (C*H*₃)₂CHCH₂Al), 0.39 (m, 2H, 9-H₂), 0.22 (m br, 4H, 2 × (CH₃)₂CHC*H*₂Al), -0.02 (s, 9H, TMS). ¹³C NMR (100 MHz, C₆D₆, 300K): δ 145.75 (C1), 128.37, 125.48, and 124.99 (C2-C5), 54.74 (C7), 28.75 (2 × (*C*H₃)₂CHCH₂Al), 27.21 (2 × (CH₃)₂*C*HCH₂Al), 26.00 (2 × (CH₃)₂CH*C*H₂Al), 23.13 (C8), 3.28 (C9), 0.18 (TMS).

### Example 11

### (3-(pyrrolidin-1-yl)propyl)diisobutyl aluminum (1l)

*N*-Allylpyrrolidin (556 mg, 5 mmol), DIBAL-H (740 mg, 5.2 mmol), Nd(versatate)₃ (163 mg solution in hexanes, 100 µmol, 2 mol %)were combined in a 8 mL screw-cap vial and stirred for 20 h at 343 K after which **1j** had formed in ca 95 %. Due to coordination of aluminum to the nitrogen atom, 1- and 2-CH₂ as well as (CH₃)₂CHC*H*₂Al exhibit diastereotopic protons.

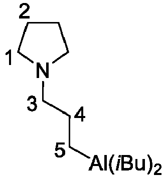

¹H NMR (400 MHz, C₆D₆, 300 K): δ 2.85 and 1.84 (m each, 2:2H, 2 × 1-H₂), 2.17 (t, ³*J*_{HH} = 6.0 Hz, 3-H₂), 1.95 (2 × (CH₃)₂C*H*CH₂Al), 1.60 (m, 2H, 4-H₂), 1.48 and 1.34 (m each, 2:2H, 2 × 2-H₂), 1.08 (d, 3JHH = 7.6 Hz, 2 × (C*H*₃)₂CHCH₂Al), 0.133 (t, ³*J*_{HH} = 7.6 Hz, 5-H₂), -0.03 and -0.12 (dd each, ²*J*_{HH} = 14.0 Hz, ³*J*_{HH} = 7.6 Hz, 2 × (CH₃)₂CHC*H*₂Al). ¹³C NMR (100 MHz, C₆D₆, 300K): δ 62.55 (C3), 54.98 (C1), 28.96 (2 × (*C*H₃)₂CHCH₂Al), 27.35 (2 × (CH₃)₂*C*HCH₂Al), 24.00 (C4), 23.00 (2 × (CH₃)₂CH*C*H₂Al), 22.86 (C2), 4.66 (C5).

There is further disclosed a method of making a functionalized elastomer, comprising the step of polymerizing a conjugated diene monomer in the presence of a lanthanide-based coordination polymerization catalyst activated with a functionalized aluminum reagent of formula 1 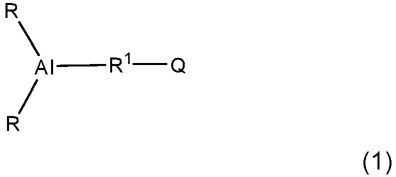 where R is a linear or branched alkyl (or alkane) group containing of from 1 to 8 carbon atoms and R1 is phenylene (or a phelylene group) or a linear or branched alkane diyl group containing of from 2 to 10 carbon atoms or a combination of one or more phenylene groups and one or more linear or branched alkane diyl groups containing of from 1 to 10 carbon atoms, Q is of formula 2 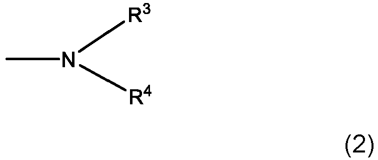 where R³ and R⁴ are independently selected to be a phenyl or a linear or branched alkyl group containing of from 1 to 10 carbon atoms or R³ and R⁴ taken together with the nitrogen atom represent a nitrogen containing heterocyclic group containing of from 4 to 12 carbon atoms.

There is further disclosed a rubber composition comprising the functionalized elastomer produced by this method, and a tire comprising the rubber composition.

Polymerizations according to the method utilize a lanthanide-based catalyst system. Suitable catalysts include neodymium-based catalysts, including neodymium carboxylates.

Such polymerizations are typically conducted in a hydrocarbon solvent that can be one or more aromatic, paraffinic, or cycloparaffinic compounds. These solvents will normally contain from 4 to 10 carbon atoms per molecule and will be liquids under the conditions of the polymerization. Some representative examples of suitable organic solvents include pentane, isooctane, cyclohexane, normal hexane, benzene, toluene, xylene, ethylbenzene, and the like, alone or in admixture.

In one embodiment, the neodymium catalyst system used in the process of this invention is made by preforming three catalyst components. These components are (1) the functionalized aluminum compound of formula 1, (2) a neodymium carboxylate, and (3) an organoboron salt compound.

The neodymium carboxylate utilizes an organic monocarboxylic acid ligand that contains from 1 to 20 carbon atoms, such as acetic acid, propionic acid, valeric acid, hexanoic acid, 2-ethylhexanoic acid, neodecanoic acid, lauric acid, stearic acid and the like neodymium naphthenate, neodymium neodecanoate, neodymium octanoate, and other neodymium metal complexes with carboxylic acid containing ligands containing from 1 to 20 carbon atoms.

The organoboron salt compound can be an ionic compound consisting of an organoboron anion with a cation.

Examples of the organoboron anion include tetraphenylborate ([BPh4]-), tetrakis(monofluorophenyl)borate ([B(C₆F₅)₄]⁻), tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and decahydro-7,8-dicarbanium borate.

Examples of the cation include a carbonium cation, an oxonium cation, an ammonium cation, a phosphonium cation, a cycloheptatrienyl cation, and a ferrocenium cation containing a transition metal. Here, the carbonium cation includes trisubstituted carbonium cations such as a triphenylcarbonium cation ([Ph₃C]⁺) and a tri(substituted phenyl)carbonium cation, and a more specific example of the tri(substituted phenyl)carbonium cation includes a tri(methylphenyl)carbonium cation. Examples of the ammonium cation include: trialkylammonium cations such as a trimethylammonium cation, a triethylammonium cation ([NEt₃H]⁺), a tripropylammonium cation, and a tributylammonium cation; N,N-dialkylanilinium cations such as a N,N-dimethylanilinium cation ([PhNMe₂H]⁺), a N,N-diethylanilinium cation, and a N,N-2,4,6-pentamethylanilinium cation; and dialkylammonium cations such as a diisopropylammonium cation and a dicyclohexylammonium cation. Specific examples of the phosphonium cation include triarylphosphonium cations such as a triphenylphosphonium cation, a tri(methylphenyl)phosphonium cation, and a tri(dimethylphenyl)phosphonium cation.

Examples of the organoboron salt compound include [Ph₃C][B(C₆F₅)_{4]}, [PhNMe₂H][BPh_{4]}, and [NEt₃H][BPh₄], [PhNMe₂H][B(C₆F₅)₄].

An organoboron compound having the same function as that of the organoboron salt compound, such as B(C6F5)3, can also be used.

Functionalized aluminum reagents of formula 1 and 2 may be produced by reaction of a compound of formula 3 with a dialkyl aluminum hydride of formula 4 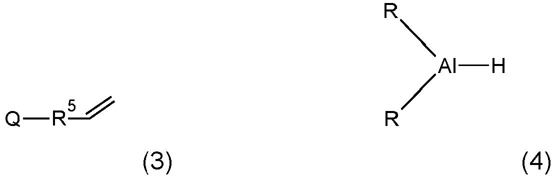 where R⁵ is a phenylene group or a linear or branched alkane diyl group containing of from 1 to 9 carbon atoms or a combination of one or more phenylene groups and one or more linear or branched alkane diyl groups containing of from 1 to 10 carbon atoms and R is as previously defined.

The reaction of the compounds of formulas 3 and 4 may be done at or neat at a temperature ranging from 25 to 75°C for 12 to 36 hours. Preferably, the reaction may proceed in a hydrocarbon solvent in the presence of a neodymium (III) catalyst.

In one embodiment, the compound of formula 4 is diisobutyl aluminum hydride (DIBAL-H).

The concentration of the total catalyst system employed of course, depends upon factors such as purity of the system, polymerization rate desired, temperature and other factors. Therefore, specific concentrations cannot be set forth except to say that catalytic amounts are used.

Temperatures at which the polymerization reaction is carried out can be varied over a wide range. Usually the temperature can be varied from extremely low temperatures such as -60°C up to high temperatures, such as 150°C. or higher. Thus, the temperature is not a critical factor of the invention. It is generally preferred, however, to conduct the reaction at a temperature in the range of from 10°C to 90°C. The pressure at which the polymerization is carried out can also be varied over a wide range. The reaction can be conducted at atmospheric pressure or, if desired, it can be carried out at sub-atmospheric or super-atmospheric pressure. Generally, a satisfactory polymerization is obtained when the reaction is carried out at autogenous pressure, developed by the reactants under the operating conditions used.

Examples of useful functionalized aluminum compounds of formula 1 include compounds such as the following compounds 1a - 1l.

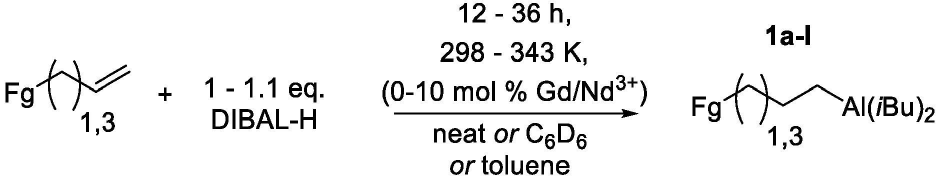

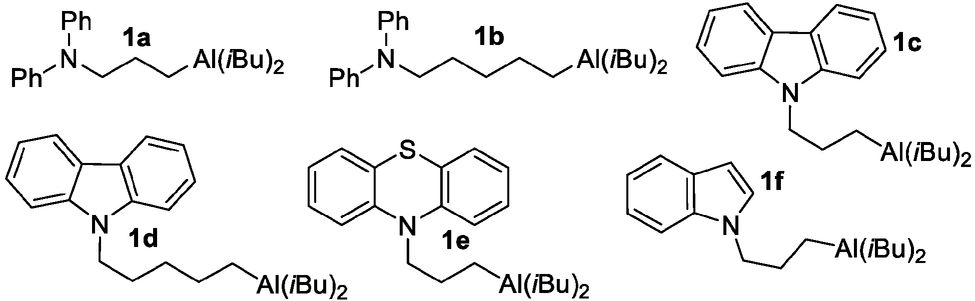

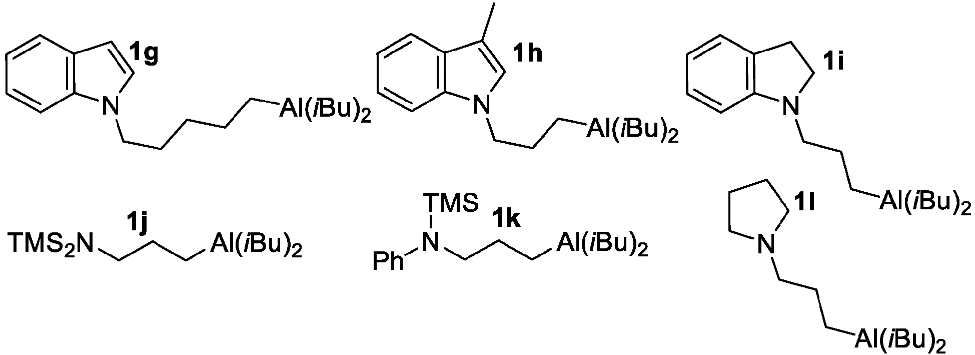

The polymerization can be quenched or terminated by the addition of a functional terminator, an alcohol or another protic source, such as water.

In one embodiment, the polymerization is terminated using a functional terminator. By functional terminator, it is meant an organic compound capable of terminating the polymerization reaction, wherein the organic compound is substituted with a functional group comprising at least one heteroatom selected from phosphorus, boron, oxygen, halogens and silicon.

In one embodiment, the functional terminator comprises at least one functional group selected from the group consisting of phosphane, phosphonic acid, phosphate, phosphodiester, phosphotriester, silyl, alklysilyl, alkoxysilyl, and siloxy.

Useful functional terminators include but are not limited to tetraethoxysilane, n-octyltriethoxysilane, 3-chloropropyltriethoxysilane, and chlorodiphenylphosphine.

Suitable monomers for use in the polymerization are conjugated diene monomers and functionalized versions thereof. Suitable conjugated diene monomers include 1,3-butadiene and isoprene. Other suitable conjugated diene monomers include 2,3-dimethyl-1,3-butadiene, piperylene, 3-butyl-1,3-octadiene, 2-phenyl-1,3-butadiene, and the like, and combinations thereof.

The use of functional aluminum-based chain transfer reagents of formula 1 imparts functionality on the end of every polymer chain end to produce a functionalized polymer. By combining the technique with known functionalization techniques such as termination with functional terminators or copolymerization with functional monomers, the polymerization results in stereoregular polymers that contain functionality on both ends, as well as in-chain. Either high-cis or high-trans polymers can be made through changes to the catalyst system, without affecting the functionalization reactions. By stereoregular, it is meant that the polymer microstructure includes at least 80 percent by weight of monomer residues (i.e., polymer subunits derived from a given monomer) in the cis 1,4- configuration, or 90 percent by weight of monomer residues in the trans 1,4-configuration. In one embodiment, the polymer contains at least 85 percent by weight of monomer residues in cis 1,4- configuration. In one embodiment, the polymer contains at least 95 percent by weight of monomer residues in trans 1,4- configuration.

The functionalized polymer made using the methods of the invention may be compounded into a rubber composition.

The rubber composition may optionally include, in addition to the functionalized polymer, one or more rubbers or elastomers containing olefinic unsaturation. The phrases "rubber" or "elastomer containing olefinic unsaturation" or "diene-based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile, which polymerize with butadiene to form NBR, methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect, the at least one additional rubber is preferably of at least two of diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of from 20 to 28 percent bound styrene or, for some applications, an E-SBR having a medium to relatively high bound styrene content, namely, a bound styrene content of from 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica. In another embodiment, from 20 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm3/100 g.

Other fillers may be used in the rubber composition including particulate fillers including ultra high molecular weight polyethylene (UHMWPE), crosslinked particulate polymer gels including those disclosed in U.S. Patent Nos. 6,242,534; 6,207,757; 6,133,364; 6,372,857; 5,395,891; or 6,127,488, and plasticized starch composite filler including but not limited to that disclosed in U.S. Patent No. 5,672,639. Such other fillers may be used in an amount ranging from 1 to 30 phr.

In one embodiment, the rubber composition may contain a conventional sulfur containing organosilicon compound. In one embodiment, the sulfur containing organosilicon compounds are 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include compounds disclosed in U.S. Patent No. 6,608,125. In one embodiment, the sulfur containing organosilicon compounds includes 3-(octanoylthio)-1-propyltriethoxysilane, CH3(CH2)6C(=O) -S-CH2CH2CH2Si(OCH2CH3)3, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the resulting vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire, and the like. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

This invention is illustrated by the following examples. Unless specifically indicated otherwise, parts and percentages are given by weight.

### Polymerization Example 1

Polybutadienes functionalized with various aluminum reagents were done as follows. To the respective amount of solid [PhNMe2H⁺][B(C₆F₅)₄⁻] (5) (1.3-2.5 equiv.) in a 12 mL screw-cap vial containing a magnetic stir bar, was added the appropriate amount of butadiene 3000-20000 equiv. in toluene or C₆D₆ stock solutions followed by the respective precatalyst solution (1 equiv. Nd, 10-120 equiv aluminum reagent). The screw-cap vial was closed and stirred at 300 rpm at the appropriate reaction temperature in an aluminum block for the duration of the experiment. Occasionally 50 mg aliquots were analyzed by NMR experiments to monitor the BD consumption. After consumption of the butadiene, 3 drops of methanol was added, then the contents of the vial were carefully transferred into a 50 mL vial containing a magnetic stir bar by the aid toluene, and the polymer was then precipitated under stirring by addition of MeOH/3N HCI (10:1), then MeOH/H2O (5:1) (at this point an emulsion forms which allows for thorough washing of the polymer), and finally by gradual addition of MeOH. The supernatant was removed, the precipitated polymer redissolved in toluene at 333 K, and then reprecipitated by adding MeOH/H20 (5:1) and finally MeOH. Residual solvent was removed by heating to 328 K under vacuum (6 mbar) for 16-72 h. Results of the polymerizations in the presence of various aluminum reagents are given in Polymerization Table 1.

### Polymerization Example 2

A series of polybutadiene polymerizations were done in the presence of aluminum compound 1c, following the procedure of Polymerization Example 1. Results are given in Polymerization Table 2.

**Table 1**

| entry | FgAl(*i*Bu)₂*^{b}* | Nd:ANBCF: Al:BD*^{c}* | conditions | Mₙ(GPC)*^{d}* [x 10⁻³ g mol⁻¹] | Mₙ(NMR)*^{e}* [x 10⁻³ g mol⁻¹] | incorp. Fg*^{f}* [%]/(Fg × Nd⁻¹) | *cis*/*trans*/1,2 [%] |
|---|---|---|---|---|---|---|---|
| 1 | **1a** | 1:1.5:20:1000 | 16 h, 328 K | 37 | 20.7 | 1.5/(0.3) | 88.5/10.5/1 |
| 2 | **1b** | 1:1.4:20:1000 | 2 h, 343 K | 21.5 | 15.4 | 15.6/(3.1) | 70.5/28.5/1 |
| 3 | **1c** | 1:1.4:10:1000 | 2 h, 343 K | 15 | 7.3 | 71/(7.1) | 74/24/2 |
| 4 | **1c** | 1:1.4:20:1000 | 2 h, 343 K | 7 | 3.5 | 76/(15.3) | 70/28/2 |
| 5*^{h}* | **1c** | 1:2.5:20:1000 | 12 h, 328 K | 7.4 | 3.8 | 73/(14.5) | 79/20/2 |
| 6 | **1c** | 1:1.4:30:1000 | 2 h, 343 K | 3.9 | 2.5 | 74/(22.3) | 70.5/28.5/1 |
| 7 | **1d** | 1:1.4:20:1000 | 16 h, 328 K | 23 | 9.1 | 28/(5.6) | 75.5/23/1.5 |
| 8 | **1e** | 1:2.5:20:1000 | 2 h, 343 K | 53 | 29 | 2.2/(0.4) | 81/15.5/3.5 |
| 9 | **1f** | 1:2.5:10:1000 | 2 h, 343 K | 26 | 13.2 | 36/(3.6) | 77/22/1 |
| 10 | **1f** | 1:2.5:20:1000 | 2 h, 343 K | 15.5 | 8.5 | 27/(5.3) | 69/29.5/1.5 |
| 11 | **1f** | 1:2.5:30:1000 | 2 h, 343 K | 9.8 | 5.1 | 24/(7.3) | 53/45.5/1.5 |
| 12 | **1g** | 1:2.5:20:1000 | 2 h, 343 K | n.d. | 13.7 | 16/(3.2) | 74/25/1 |
| 13 | **1h** | 1:2.5:20:1000 | 2 h, 343 K | 31 | 12.3 | 20/(4) | 79/20/1 |
| 14 | **TIBA** | 1:1.5:33:1000 | 2 h, 343 K | 127 | 89 | n.a. | 79/20/1 |
| 15 | **TIBA** | 1:1.5:23:1000 | 2 h, 343 K | 153 | 38.5 | n.a. | 79.5/19/1.5 |
| 16 | **DIBAL-H** | 1:1.5:21:4000 | 40 h, 298 K | 29 | 20.3 | n.a. | 93.4/6.5/0.6 |

| | | | | | | | |
|---|---|---|---|---|---|---|---|
| *^{a}*: All reactions conducted with 2.2 M BD solution in benzene-*d*₆ or toluene in 12 ml screw-cap vials until full BD consumption. Polymers were isolated in quantitative yield by precipitation, redissolution and repricipation. *^{b}*: (Functional) aluminum reagent. *^{c}*: ratio of NdVs₃: [Ph₂NMe₂H⁺][B(C₆F₅)₄⁻]: FgAl(*i*Bu)₂: BD. *^{d}*: refractive index GPC in thf solution at 298 K vs. linear polystyrene standards. *^{e}*: based on initiating amino-functionalized-, isobutyl-, and CH₃CH=CH-groups. *^{f}*: percentage of amino functionalities found in the polymer from starting amino-funtionalities in the aluminum reagent/ number of amino-functionalized polymer chains per neodymium (= number of functionalized chain transfers). *^{g}*: determined by inverse gated ¹³C NMR experiments. ^{h}: polymerization quenched by addition of 1 mmol CD₃OD before isolation. | | | | | | | |

**Table 2**

| Entry | Nd:ANBCF: Al:BD*^{d}* | conditions | Mn(GPC)*^{c}* [10³ g/mol] | Mₙ(NMR)*^{e}* [10³ g/mol] | incorp. Fg*^{f}* [%]/(Fg/Nd) | cis/trans/1,2*^{g}* [%] |
|---|---|---|---|---|---|---|
| 1 | 1:1.5:20:2000 | 13 h 318 K | 13.7 | 6.3 | 85/(17.1) | 89/10/1 |
| 2 | 1:1.5:20:2000 | 1 h 298 K, then 12 h 318 K | 11.4 | 5.8 | 93.7/(18.7) | 88/11/1 |
| 3 | 1:1.5:20:3000 | 40 h, 298 K | 18.6 | 8.8 | 91.6/(18.3) | 94.5/4.5/1 |
| 4 | 1:1.5:20:4000 | 13 h, 318 K | 21 | 11.9 | 88.8/(17.8) | 92/7/1 |
| 5 | 1:1.4:30:6000 | 60 h, 298 K | 32 | 12.5 | 84.7/(25.4) | 95/4/1 |
| 6 | 1:1.5:10:2000 | 40 h, 298 K | 42 | 12.6 | 84.6/(16.7) | 93/6/1 |
| 7 | 1:1.5:20:4000 | 40 h, 298K | 28 | 12.2 | 89.6/(17.9) | 95.5/3.5/1 |
| 8 | 1:1.5:20:5000 | 60 h, 298K | 32 | 14.3 | 96/(19) | 95.5/3.5/1 |
| 9 | 1:1.4:30:20000*^{h}* | 60 h, 318 K | 86.8 | 37.6 | 89/(26.5) | 91.5/7/1.5 |
| 10 | 1:1.5:80:6000 | 40 h, 328 K | 2.6 | 3.5 | 94/(75) | 84.5/13.5/2 |
| 11 | 1:1.5:120:3000 | 40 h, 343 K | 2.5 | 1.8 | 77.5/(93) | 65.5/33/1.5 |

| | | | | | | |
|---|---|---|---|---|---|---|
| *^{a}*: All reactions conducted with 2.2 M BD solution in benzene-*d*₆ or toluene in 12 ml screw-cap vials. Polymers were isolated in quantitative yield by precipitation after quenching with CO₃OD, redissolution and reprecipation. *^{b}*: ratio of NdVs₃: **5**: **1c**: BD. *^{c}*: refractive index GPC in thf solution at 298 K vs. linear polystyrene standards. *^{e}*: based on initiating propylcarbazole-functionalized- and *i*Bu groups. *^{f}*: % of propylcarbazole groups found in the polymer vs starting propylcarbazole in 1c/ number of propylcarbazole-initiated polymer chains per Nd (= number of functionalized chain transfers). *^{g}*: determined by inverse gated ¹³C NMR experiments. *^{h}*: the reaction was started with a AI:BD ratio 30:3000 for 20 h after which the remaining BD was added: | | | | | | |

## Claims

1. A functionalized aluminum reagent of formula 1 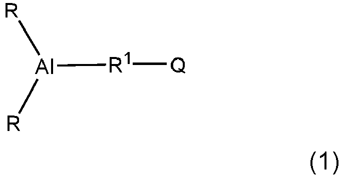 wherein R is a linear or branched alkyl or alkane group containing of from 1 to 8 carbon atoms and R¹ is a phenylene group or a linear or branched alkane diyl group containing of from 2 to 10 carbon atoms or a combination of one or more phenylene groups and one or more linear or branched alkane diyl groups containing of from 1 to 10 carbon atoms, Q is of formula 2 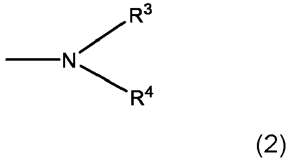 wherein R³ and R⁴ are independently selected from a phenyl group or a linear or branched alkyl group containing of from 1 to 10 carbon atoms or R³ and R⁴ taken together with the nitrogen atom represent a nitrogen containing heterocyclic group containing of from 4 to 12 carbon atoms.

2. The functionalized aluminum reagent of claim 1 selected from the group of reagents 1a to 1l consisting of:

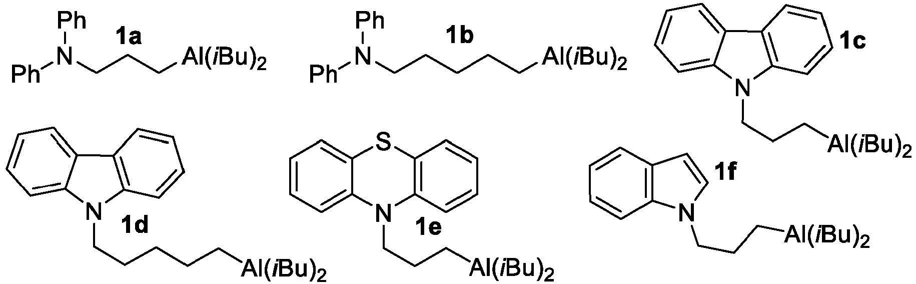

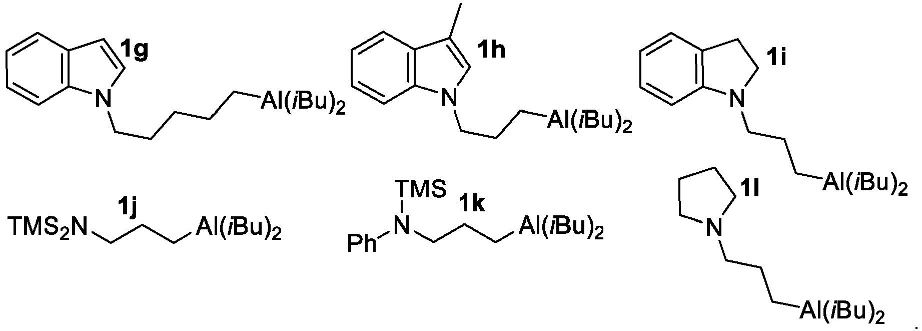

3. A method of making a functionalized elastomer comprising the step of polymerizing a conjugated diene monomer in the presence of a lanthanide-based coordination polymerization catalyst activated with a functionalized aluminum reagent of claim 1 or 2.

4. A functionalized polymer produced using the method of claim 3.

5. A rubber composition comprising the functionalized polymer of claim 4.

6. A pneumatic tire comprising the rubber composition of claim 5.

## Patentansprüche

1. Funktionalisiertes Aluminiumreagenz der Formel 1 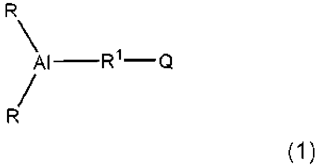 wobei R eine lineare oder verzweigte Alkyl- oder Alkangruppe ist, die 1 bis 8 Kohlenstoffatome enthält, und R¹ eine Phenylengruppe oder eine lineare oder verzweigte Alkandiylgruppe ist, die 2 bis 10 Kohlenstoffatome enthält, oder eine Kombination aus einer oder mehreren Phenylengruppen und einer oder mehreren linearen oder verzweigten Alkandiylgruppen ist, die 1 bis 10 Kohlenstoffatome enthalten, Q die Formel 2 hat 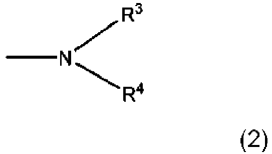 wobei R³ und R⁴ unabhängig voneinander aus einer Phenylgruppe oder einer linearen oder verzweigten Alkylgruppe, die 1 bis 10 Kohlenstoffatome enthält, ausgewählt sind, oder R³ und R⁴ zusammen mit dem Stickstoffatom eine stickstoffhaltige heterocyclische Gruppe, die 4 bis 12 Kohlenstoffatome enthält, darstellen.

2. Funktionalisiertes Aluminiumreagenz nach Anspruch 1, das aus der Gruppe von Reagenzien 1a bis 1l ausgewählt ist, die aus Folgendem besteht:

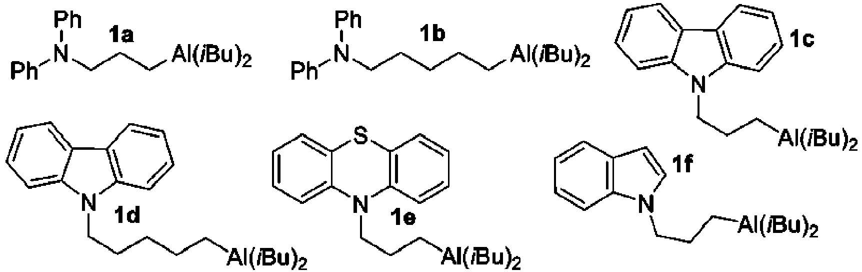

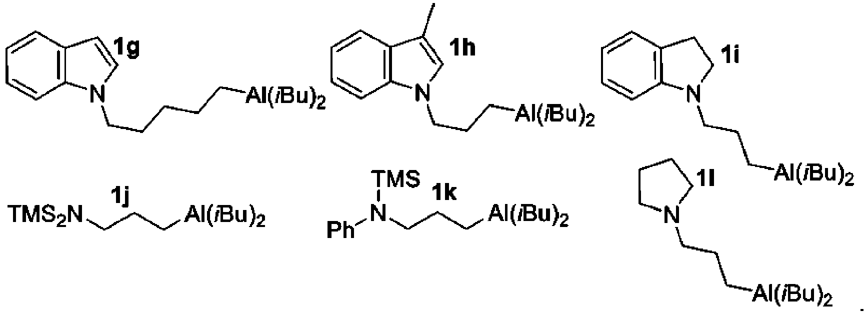

3. Verfahren zum Herstellen eines funktionalisierten Elastomers, das den Schritt eines Polymerisierens eines konjugierten Dienmonomers in der Gegenwart eines Koordinationspolymerisationskatalysators auf Lanthanidbasis, der mit einem funktionalisierten Aluminiumreagenz nach Anspruch 1 oder 2 aktiviert wird, umfasst.

4. Funktionalisiertes Polymer, das unter Verwendung des Verfahrens nach Anspruch 3 produziert wird.

5. Kautschukzusammensetzung, das das funktionalisierte Polymer nach Anspruch 4 umfasst.

6. Luftreifen, der die Kautschukzusammensetzung nach Anspruch 5 umfasst.

## Revendications

1. Réactif fonctionnalisé à base d'aluminium qui répond à la formule 1 : 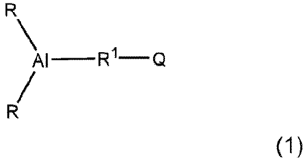 dans laquelle R représente un groupe alcane ou un groupe alkyle à chaîne droite ou à chaîne ramifiée, qui contient de 1 à 8 atomes de carbone et R¹ représente un groupe phénylène ou un groupe alcanediyle à chaîne droite ou à chaîne ramifiée qui contient de 2 à 10 atomes de carbone ou représente une combinaison d'un ou de plusieurs groupes phénylène et d'un ou de plusieurs groupes alcanediyle à chaîne droite ou à chaîne ramifiée qui contient de 1 à 10 atomes de carbone, Q répond à la formule 2 : 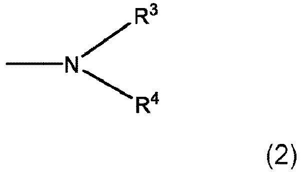 dans laquelle R³ et R⁴ sont choisis, de manière indépendante, parmi un groupe phényle ou un groupe alkyle à chaîne droite ou à chaîne ramifiée qui contient de 1 à 10 atomes de carbone ou bien R³ et R⁴, pris ensemble avec l'atome d'azote, représentent un groupe hétérocyclique azoté qui contient de 4 à 12 atomes de carbone.

2. Réactif fonctionnalisé à base d'aluminium selon la revendication 1, qui est choisi parmi le groupe de réactifs 1a à 1l constitué par :

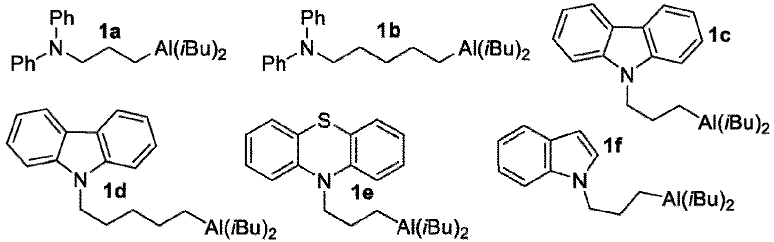

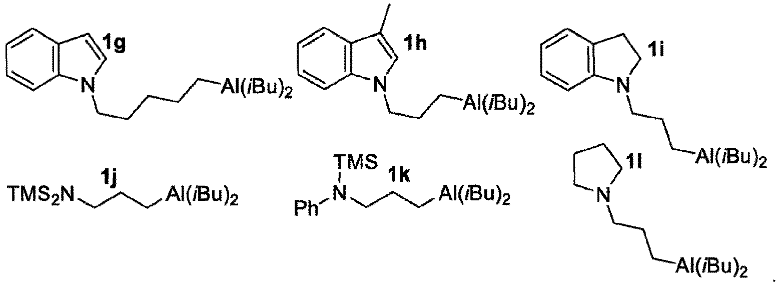

3. Procédé de préparation d'un élastomère fonctionnalisé, qui comprend l'étape dans laquelle on polymérise un monomère diénique conjugué en présence d'un catalyseur de polymérisation par coordination à base de lanthanide, qui est activé avec un réactif fonctionnalisé à base d'aluminium selon la revendication 1 ou 2.

4. Polymère fonctionnalisé que l'on obtient en utilisant le procédé selon la revendication 3.

5. Composition de caoutchouc qui comprend le polymère fonctionnalisé selon la revendication 4.

6. Bandage pneumatique comprend la composition de caoutchouc selon la revendication 5.
